# EUROPEAN PATENT APPLICATION

(11) **EP 1 408 571 A2**
(43) Date of publication of application: **14.04.2004**
(21) Application number: 03022847.2
(22) Date of filing: 08.10.2003
(51) Int. Cl.: H01M 8/02, H01M 8/04

(54) **Container structure for fuel cell**

(30) Priority: 09.10.2002 JP 2002296315
(71) Applicant: NISSAN MOTOR CO., LTD., Yokohama-shi Kanagawa-ken (JP)
(72) Inventor: Yamada, Takahiro, Yokosuka-shi Kanagawa-ken (JP); Inokuchi, Iwane, Yokohama-shi Kanagawa-ken (JP)
(74) Representative: Grünecker, Kinkeldey, Stockmair & Schwanhäusser Anwaltssozietät

(57) **Abstract**

A container structure for a fuel cell comprises a fuel cell container, a separate plate having a plurality of orifices, an exhaust pipe discharging gas in the fuel cell container, and a compressed air pipe sending a compressed air into the fuel cell container. In the container structure, the inside of the fuel cell container is divided into an exhaust manifold unit and a cell housing unit housing the fuel cell by the separate plate, the exhaust pipe is attached to connect an exhaust port provided on the exhaust manifold unit and an exhaust outlet provided on a surface of a vehicle, an air pressure in the exhaust manifold unit is set at an atmospheric pressure, and an air pressure in the cell housing unit is set equal to or smaller than a fuel cell gas pressure and equal to or larger than the atmospheric pressure by the compressed air pipe.

## Description

### BACKGROUND OF THE INVENTION

### 1. Field of the Invention

The present invention relates to a container structure housing a fuel cell of a fuel cell vehicle.

### 2. Description of the Related Art

The gazette of Japanese Patent Application Laid-Open No. H8-31436 (published in 1996) discloses a conventional container structure for a fuel cell.

### SUMMARY OF THE INVENTION

In the foregoing conventional technology, a ventilation port is directly attached onto a container which houses a fuel cell, and outside air is taken therefrom to ventilate the inside of the container. In this case, the number of revolutions of a ventilation fan or opening/closing of an open valve is controlled in response to the concentration of hydrogen permeating a fuel cell stack, thus exhausting permeation hydrogen to the air. Hence, there is a possibility that a short circuit can occur due to dirt such as dust, humidity and the like, which enter the fuel cell container from the outside while the outside air is being taken in or the permeation hydrogen is being exhausted to the air.

The present invention was made in consideration of the above-described problems. It is an object of the present invention to provide a container structure for a fuel cell where there is a small possibility of entry of dirt such as dust, humidity and the like from the outside.

The first aspect of the present invention provides a container structure for a fuel cell, comprising: a fuel cell container; a separate plate having a plurality of orifices; an exhaust pipe discharging gas in the fuel cell container; and a compressed air pipe sending a compressed air into the fuel cell container, wherein the inside of the fuel cell container is divided into an exhaust manifold unit and a cell housing unit housing the fuel cell by the separate plate, the exhaust pipe is attached to connect an exhaust port provided on the exhaust manifold unit and an exhaust outlet provided on a surface of a vehicle, and an air pressure in the exhaust manifold unit is set at an atmospheric pressure, and the compressed air pipe is attached onto the cell housing unit, and an air pressure in the cell housing unit is set equal to or smaller than a fuel cell gas pressure and equal to or larger than the atmospheric pressure.

The second aspect of the present invention provides a container structure for a fuel cell, comprising: a fuel cell container; a separate plate having a plurality of orifices; and an exhaust pipe discharging gas in the fuel cell container, wherein the inside of the fuel cell container is divided into an exhaust manifold unit and a cell housing unit housing the fuel cell by the separate plate, the exhaust pipe is attached to connect an exhaust port provided on the exhaust manifold unit and an exhaust outlet provided on a surface of a vehicle, and an exhaust fan is provided in any one of the insides of the exhaust pipe and the exhaust manifold unit.

The third aspect of the present invention provides a container structure for a fuel cell, comprising: a fuel cell container; an exhaust pipe discharging gas in the fuel cell container; a pipe making the fuel cell container and the exhaust pipe communicate with each other through an orifice; and a compressed air pipe sending a compressed air into the fuel cell container, wherein the orifice and the pipe are provided above the fuel cell container, an air pressure in the pipe is set at an atmospheric pressure by connecting the pipe to the exhaust pipe connected to an exhaust outlet provided on a surface of a vehicle, and the compressed air pipe is attached onto the fuel cell container, and an air pressure in the fuel cell container is set equal to or smaller than a fuel cell gas pressure and equal to or larger than the atmospheric pressure.

### BRIEF DESCRIPTION OF THE DRAWINGS

The invention will now be described with reference to the accompanying drawings wherein;
FIG. 1 is a cross-sectional view illustrating a container structure for a fuel cell of the first embodiment according to the present invention;
FIG. 2 is a schematic perspective view illustrating the container structure for the fuel cell of the first embodiment according to the present invention;
FIG. 3 is a cross-sectional view illustrating a container structure for the fuel cell of the second embodiment according to the present invention;
FIG. 4 is a schematic perspective view illustrating the container structure for the fuel cell of the second embodiment according to the present invention;
FIG. 5 is a cross-sectional view illustrating a container structure for the fuel cell of the third embodiment according to the present invention;
FIG. 6 is a schematic perspective view illustrating the container structure for the fuel cell of the third embodiment according to the present invention;
FIG. 7 is a cross-sectional view illustrating the container structure for the fuel cell of the fourth embodiment according to the present invention;
FIG. 8 is a schematic perspective view illustrating the container structure for the fuel cell of the fourth embodiment according to the present invention; and
FIG. 9 is a view illustrating a separate plate.

### DETAILED DESCRIPTION OF THE PREFERRED EMBODIMENT

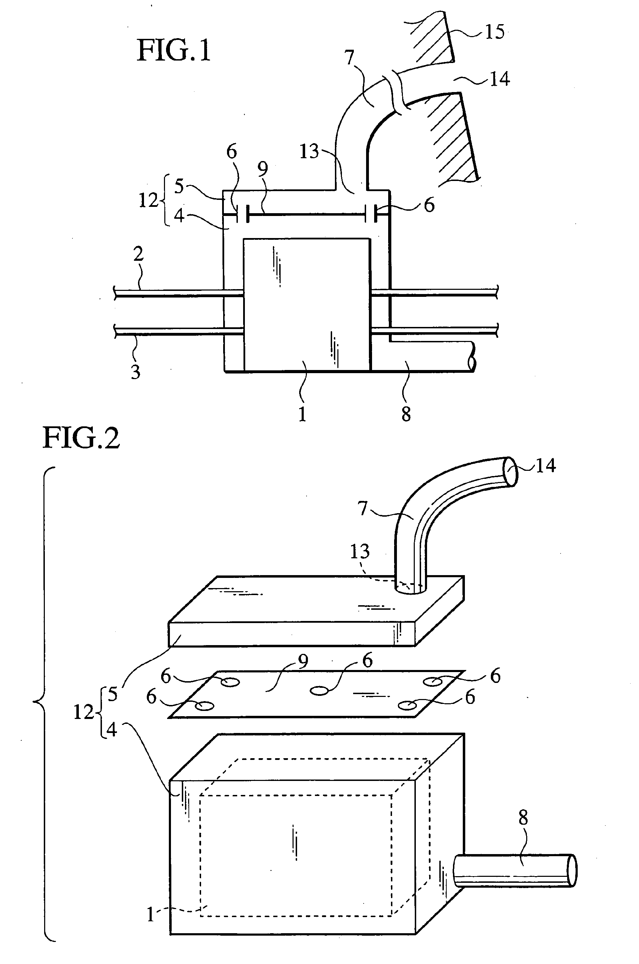

A container structure for a fuel cell according to the present invention, in which a fuel cell 1 is housed in a container and mounted on a vehicle, will be described by use of FIGs. 1 to 9.

### (First Embodiment)

A configuration of a first embodiment will be described by use of FIGs. 1, 2 and 9.

The first embodiment includes the fuel cell 1, the fuel gas pipe 2 , the air pipe 3 , the exhaust pipe 7 , the compressed air pipe 8, and the fuel cell container 12.

As the fuel cell 1, a polymer electrolyte fuel cell (PEFC), a solid oxide fuel cell (SOFC) and the like can be utilized, whereas no particular limitations are imposed thereon. The fuel gas pipe 2 and the air pipe 3 are attached to the fuel cell 1, and supply fuel gas (hydrogen and the like) and oxidizing gas (air and the like) to the fuel cell 1. The fuel cell container 12 includes the exhaust manifold unit 5 as an upper lid portion and the cell housing unit 4 as a container portion. In addition, the separate plate 9 is sandwiched and fixed between the exhaust manifold unit 5 and the cell housing unit 4 in the inside of the fuel cell container 12.

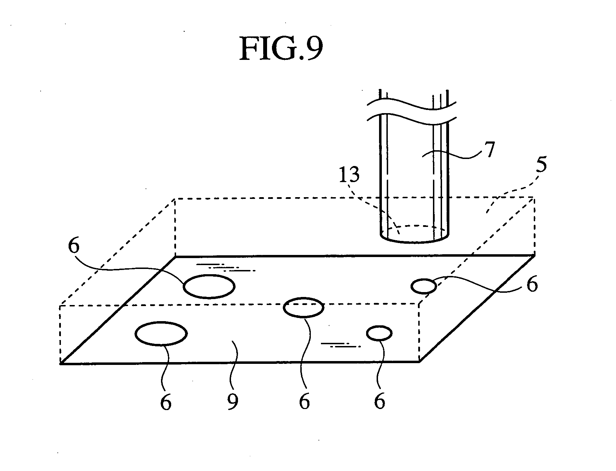

The orifices 6 are provided at all of the four corners and the center on the separate plate 9. Moreover, as shown in FIG. 9, with regard to the diameters of the orifices 6 provided in the separate plate 9, orifices 6 close to the exhaust port 13 are set small in diameter, and orifices 6 distant therefrom are set large in diameter.

The fuel cell 1 into which the fuel gas pipe 2 and the air pipe 3 are attached are housed in the cell housing unit 4. Moreover, the compressed air pipe 8 is attached onto the corner of the side face of the cell housing unit 4. The exhaust pipe 7 extended from the exhaust port 13 to the vehicle side face 15 is attached onto the upper portion of the exhaust manifold unit 5. This exhaust pipe 7 is bent on the way from the exhaust port 13 to the vehicle side face 15.

Next, the operation of the first embodiment will be described.

When hydrogen permeates the fuel cell 1, air compressed by a compressor for supply to the fuel cell 1 is divided and sent to the cell housing unit 4 from the compressed air pipe 8. In this case, with regard to the compressed air sent to the cell housing unit 4, air passing through an air filter (not shown) attached in the vicinity of the compressor is sent. Accordingly, dirt such as dust in the compressed air is removed. The air pressure in the cell housing unit 4 is set equal to or smaller than the fuel cell gas pressure and equal to or larger than the atmospheric pressure by the compressed air sent from the compressed air pipe 8. Therefore, an air pressure difference occurs between the cell housing unit 4 and the exhaust manifold unit 5, which is at the atmospheric pressure. Here, the fuel cell gas pressure represents pressures of the fuel gas and oxidizing gas in the fuel cell stack. Then, the permeation hydrogen flows into the exhaust manifold unit 5 through the orifices 6 while accelerating a flow velocity thereof by the air pressure difference. Then, the hydrogen is gathered together at the exhaust pipe 7 attached onto the exhaust port 13, and then discharged to the outside of the vehicle from the exhaust outlet 14 located on the vehicle side face 15.

As described above, in the first embodiment, a structure is configured, in which the permeation hydrogen in the fuel cell container 12 is gathered together by the exhaust pipe 7 while accelerating the flow velocity by the air pressure difference, and then exhausted to the outside of the vehicle. Therefore, it is difficult for dirt such as dust to enter the fuel cell container. In addition, a structure is configured, in which the exhaust outlet 14 of the exhaust pipe 7 is located on the vehicle side face 15 without providing the exhaust outlet 14 directly to the fuel cell container 12. Therefore, dirt, water and the like can be prevented from adhered onto the fuel cell stack.

Furthermore, a structure is configured, in which the hydrogen is gathered together by the exhaust pipe 7 and exhausted to the outside of the vehicle. Accordingly, the hydrogen can be exhausted to the outside of the vehicle no matter how the fuel cell container 12 is inclined. In addition, in the container structure of the foregoing conventional example, a ventilation port is provided directly to the container, and the hydrogen is exhausted therefrom. Consequently, in some cases, the hydrogen has remained in a dent in the inside of the vehicle, for example, on the back surface of a car hood. On the contrary, the container structure of the present invention is a structure in which the hydrogen is gathered together at one spot for exhausting and exhausted to the outside of the vehicle, and therefore, the hydrogen does not remain in the dent and the like in the inside of the vehicle. Moreover, a permeation hydrogen sensor can be disposed easily in the fuel cell container 12.

Moreover, a structure is configured, in which a difference between the gas pressure in the fuel cell 1 and the air pressure outside the fuel cell 1 is reduced. Consequently, the permeation amount of the gas in the fuel cell 1 can be controlled.

Referring to FIG. 1, the exhaust manifold unit 5 is constructed so as not to be high, and to be narrow when compared with the cell housing unit 4. Hence, the exhaust manifold unit 5 does not lose the flow velocity accelerated by the air pressure difference. Specifically, if the space of the exhaust manifold unit 5 is wide, the permeation hydrogen that has been accelerated is diffused therein and decelerated. Consequently, the hydrogen is not exhausted to the outside of the vehicle efficiently. However, because the container structure of the present invention has the exhaust manifold unit 5, which is narrow, the permeation hydrogen can be exhausted securely, and further, the fuel cell container 12 can be space-saving.

The separate plate 9 can be installed easily because the separate plate 9 is just sandwiched between the upper lid portion and container portion of the fuel cell container 12.

With regard to the diameters of the orifices 6, orifices 6 close to the exhaust port 13 are set small in diameter, and orifices 6 distant therefrom are set large in diameter. Thus, the flow amount of gas exhausted from the large diameter orifices 6 becomes larger than the flow amount of gas exhausted from the small diameter orifices 6. Hence, the hydrogen remaining in the exhaust manifold unit 5 can be exhausted efficiently.

Moreover, because the exhaust pipe 7 is bent on the way to the vehicle side face 15, the entry of falling dust and the like into the exhaust manifold unit 5 is eliminated. Moreover, though not shown, a filter may be provided on the exhaust outlet 14 for the purpose of preventing the entry of dust and the like.

### (Second Embodiment)

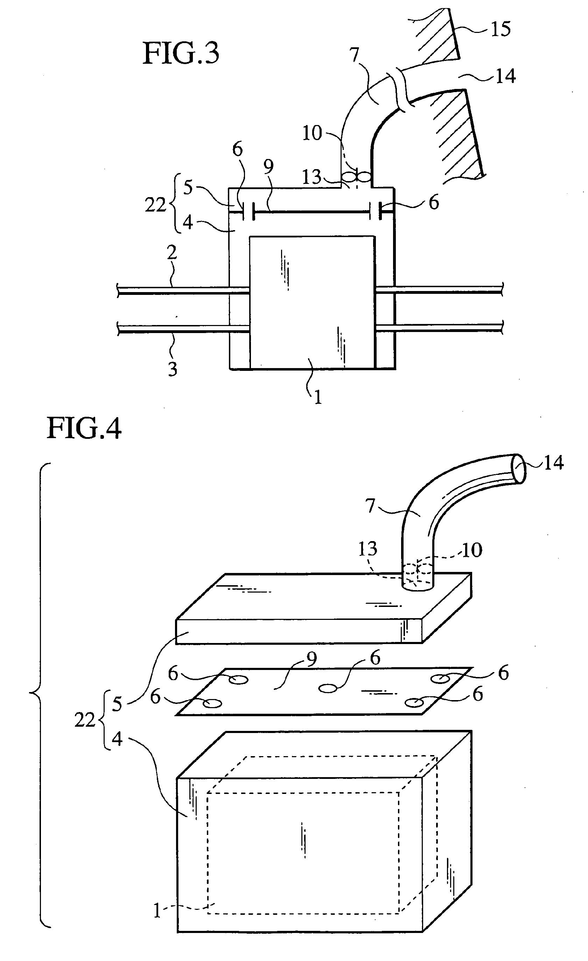

A configuration of a second embodiment will be described by use of FIGs. 3, 4 and 9. Note that, in the drawings, the same reference numerals will be given to portions similar to those of the first embodiment in the configuration of the container structure for the fuel cell of this embodiment, and repeated description will be omitted.

The second embodiment includes the fuel cell 1, the fuel gas pipe 2, the air pipe 3, the exhaust pipe 7, the separate plate 9, the exhaust fan 10, and the fuel cell container 22. Further, the orifices 6 are provided in the separate plate 9. In this embodiment, the compressed air pipe 8 is not provided, but the exhaust fan 10 is provided in the vicinity of the exhaust port 13 of the exhaust pipe 7.

The operation of the second embodiment will be described.

When hydrogen permeates the fuel cell 1, an air pressure in the exhaust manifold unit 5 is made negative relative to the atmospheric pressure by the exhaust fan 10. Thus, an air pressure difference occurs between the cell housing unit 4 and the exhaust manifold unit 5. Then, the permeation hydrogen flows into the exhaust manifold unit 5 through the orifices 6 while accelerating a flow velocity thereof by the air pressure difference, and then is discharged to the outside of the vehicle from the exhaust port 14 located on the vehicle side face 15.

As described above, in the second embodiment, a structure is configured, in which the permeation hydrogen in the fuel cell container 22 is gathered together by the exhaust pipe 7 while accelerating the flow velocity by the air pressure difference, and then exhausted to the outside of the vehicle. Therefore, it is difficult for dirt such as dust to enter the fuel cell container. In addition, a structure is configured, in which the exhaust outlet 14 of the exhaust pipe 7 is located on the vehicle side face 15 without providing the exhaust outlet 14 directly to the fuel cell container 22. Therefore, dirt, water and the like can be prevented from adhering onto the fuel cell stack.

Moreover, when the exhaust fan 10 is provided in the exhaust pipe 7, the gas sucked through the orifices 6 is gathered, thus making it possible to miniaturize the exhaust fan 10. Furthermore, because the exhaust fan 10 attached into the exhaust pipe 7 is miniaturized, it is made possible to enhance the degree of freedom in the attachment position of the exhaust fan 10 into the exhaust pipe 7.

The attachment position of the exhaust fan is a mere example, and for example, even if the exhaust fan is attached into the exhaust manifold unit 5, a similar effect can be obtained.

### (Third Embodiment)

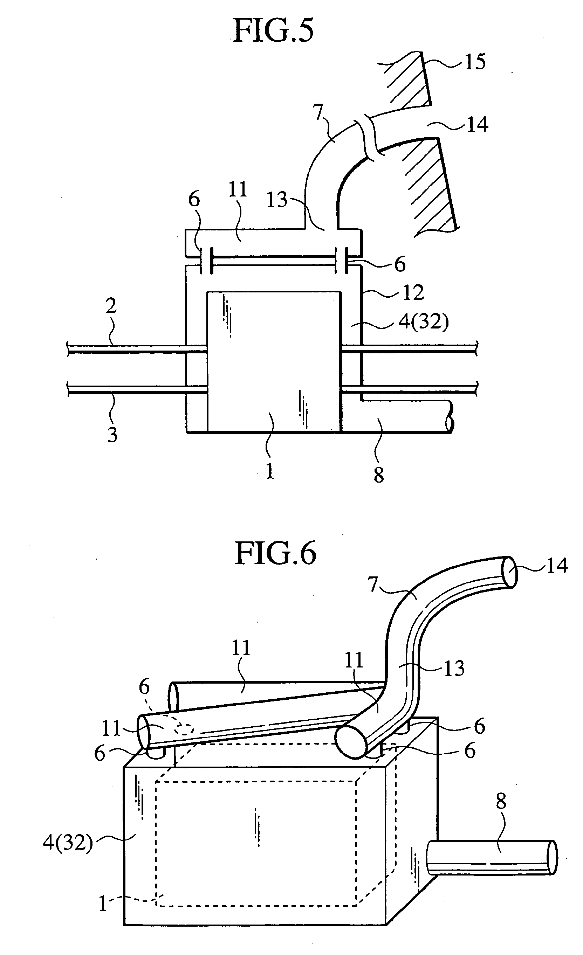

First, a configuration of a third embodiment will be described by use of FIGs. 5 , 6 and 9. Note that, in the drawings, the same reference numerals will be given to portions similar to those of the first embodiment in the configuration of the cell container for the fuel cell of this embodiment, and repeated description will be omitted.

The third embodiment includes the fuel cell 1, the fuel gas pipe 2, the air pipe 3, the exhaust pipe 7, the compressed air pipe 8, the pipe 11, and the fuel cell container 32.

The fuel cell 1 into which the fuel gas pipe 2 and the air pipe 3 are attached is housed in the cell housing unit 4 of the fuel cell container 32. The compressed air pipe 8 is attached onto the corner of the side face of the cell housing unit 4. Moreover, the pipes 11 are provided as exhaust manifolds above the cell housing unit 4.

Three pieces of the pipes 11 are arranged from one vertex of the upper surface of the fuel cell container 32 toward the three remaining vertexes. Each of the pipes 11 and the fuel cell container 32 are connected to each other by each of the orifices 6 attached on the four corners on the upper surface of the fuel cell container 32. Then, a point where the respective pipes 11 intersect is attached to the exhaust pipe 7 that is extended to the vehicle side face 15 and bent on the way.

Next, the operation of the third embodiment will be described.

When hydrogen permeates the fuel cell 1, air compressed by a compressor for supply to the fuel cell 1 is divided and sent to the cell housing unit 4 from the compressed air pipe 8. The air pressure in the cell housing unit 4 is set equal to or smaller than the fuel cell gas pressure and equal to or larger than the atmospheric pressure by the compressed air sent from the compressed air pipe 8. Therefore, air pressure differences occur between the cell housing unit 4 and the pipes 11 under the atmospheric pressure. Then, the hydrogen permeating the fuel cell 1 flows into the pipes 11 through the orifices 6 while accelerating a flow velocity thereof by the air pressure differences. Then, the hydrogen is gathered together at the exhaust pipe 7 attached onto the exhaust port 13, and then discharged to the outside of the vehicle from the exhaust outlet 14 located on the vehicle side face 15.

As described above, in the third embodiment, a structure is configured, in which the permeation hydrogen in the fuel cell container 32 is gathered together by the exhaust pipe 7 while accelerating the flow velocity by the air pressure difference, and then exhausted to the outside of the vehicle. Therefore, it is difficult for dirt such as dust to enter the fuel cell container. In addition, a structure is configured, in which the exhaust outlet 14 of the exhaust pipe 7 is located on the vehicle side face 15 without providing the exhaust outlet 14 directly to the fuel cell container 32. Therefore, dirt, water and the like can be prevented from adhering onto the fuel cell stack.

Moreover, as shown in FIG. 9, with regard to the diameters of the orifices 6 attached onto the fuel cell container 32, orifices 6 close to the exhaust port 13 are set small in diameter, and orifices 6 distant therefrom are set large in diameter. Thus, the hydrogen accumulated in the pipes 11 can be exhausted efficiently.

Furthermore, because the pipes 11 are attached directly onto the orifices 6, the separate plate 9 can be eliminated, and in addition, by adjusting the diameters of the pipes 11, the flow velocity of the gas can be controlled, and further, the flow amount thereof can be restricted. Hence, the exhaust flow amount of the compressed air can be reduced more than in the first embodiment.

### (Fourth Embodiment)

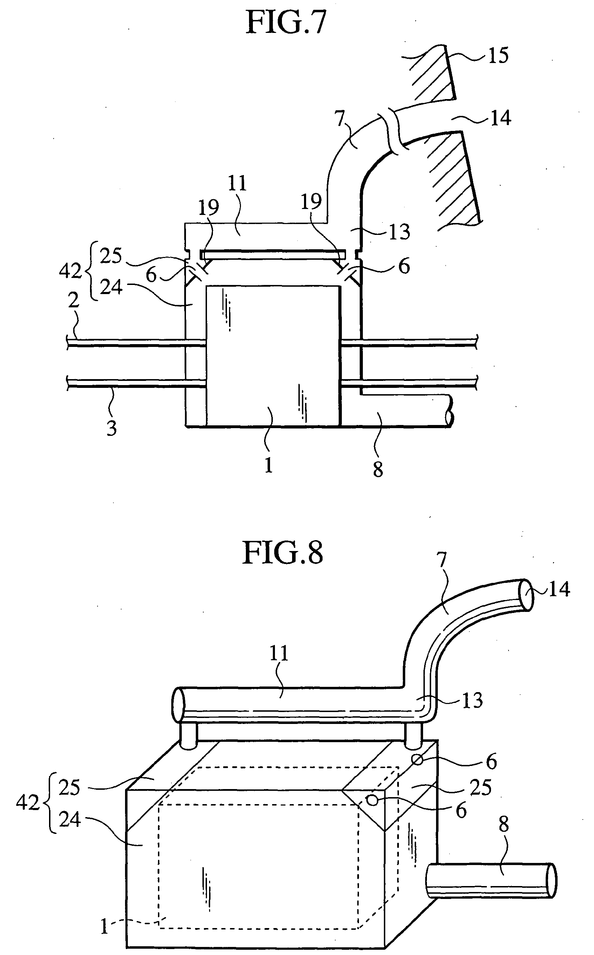

First, a configuration of a fourth embodiment will be described by use of FIGs. 7 and 8. Note that, in the drawings, the same reference numerals will be given to portions similar to those of the first embodiment in the configuration of the fuel cell container of this embodiment, and repeated description will be omitted.

The fourth embodiment includes the fuel cell 1, the fuel gas pipe 2, the air pipe 3, the exhaust pipe 7, the compressed air pipe 8, the separate plate 19, the pipe 11, and the fuel cell container 42.

The fuel cell container 42 as a cuboid is composed of a hexagonal columnar space (cell housing unit 24) and two triangular columnar spaces (exhaust manifold units 25), in which the exhaust manifold units 25 are provided on the corners of the fuel cell container 24.

Then, the separate plates 19 are sandwiched and fixed between the cell housing unit 24 and the exhaust manifold units 25, in which the orifices 6 are provided. In addition, the fuel cell 1 into which the fuel gas pipe 2 and the air pipe 3 are attached is disposed in the cell housing unit 24 of the fuel cell container 42. Moreover, the compressed air pipe 8 is attached onto the corner of the side face of the cell housing unit 24. Furthermore, the pipe 11 is located above the exhaust manifold units 25, connected thereto, respectively, and connects these two exhaust manifold units 25 to each other. This pipe 11 is attached to the exhaust pipe 7 that is extended to the vehicle side face 15 and bent on the way.

Next, the operation of the fourth embodiment will be described.

When hydrogen permeates the fuel cell 1, air compressed by a compressor for supply to the fuel cell 1 is divided and sent to the cell housing unit 24 from the compressed air pipe 8. The air pressure in the cell housing unit 24 is set equal to or smaller than the fuel cell gas pressure and equal to or larger than the atmospheric pressure by the compressed air sent from the compressed air pipe 8. Therefore, air pressure differences occur between the cell housing unit 24 and the exhaust manifold units 25, which is under the atmospheric pressure. Then, the hydrogen permeating the fuel cell 1 flows into the exhaust manifold units 25 through the orifices 6 while accelerating a flow velocity thereof by the air pressure differences. Then, the hydrogen is gathered together at the exhaust pipe 7 attached onto the exhaust port 13, and then discharged to the outside of the vehicle from the exhaust outlet 14 located on the vehicle side face 15.

As described above, in the fourth embodiment, a structure is configured, in which the permeation hydrogen in the fuel cell container 42 is gathered together by the exhaust pipe 7 while accelerating the flow velocity by the air pressure difference, and then exhausted to the outside of the vehicle. Therefore, it is difficult for dirt such as dust to enter the fuel cell container. In addition, a structure is configured, in which the exhaust outlet 14 of the exhaust pipe 7 is located on the vehicle side face 15 without providing the exhaust outlet 14 directly to the fuel cell container 42. Therefore, dirt, water and the like can be prevented from being adhered onto the fuel cell stack.

In addition, a structure is configured, in which the narrow exhaust manifold units 25 that do not lose the flow velocity accelerated by the air pressure difference are added. Therefore, the fuel cell container 42 can be space-saving.

As shown in FIG. 9, with regard to the diameters of the orifices 6 attached onto the separate plate 19, orifices 6 close to the inlets of the pipe 11 located above the exhaust manifold units 25 are set small in diameter, and orifices 6 distant therefrom are set large in diameter. Thus, the hydrogen accumulated in the exhaust manifold units 25 can be exhausted efficiently.

Moreover, by adopting the configuration like this embodiment, it is possible to reduce the number of pipes 11 and to save the space as compared with the third embodiment.

Furthermore, by providing the separate plates 19 as in this embodiment, it is made possible to reduce the area of the separate plates 19 as compared with the first embodiment.

Each of the embodiments described above is only a mere example. Regarding the first and second embodiments, the number and diameter of the orifices attached onto the separate plate can be set in accordance with the size and shape of the fuel cell container. Regarding the third and fourth embodiments, the number and diameter of the orifices and the number and attachment method of the pipes can be set according to needs. Moreover, as in the second embodiment, the compressed air pipe is eliminated, and the exhaust fan is attached, thus making it possible to obtain a similar effect. Furthermore, by providing both of the exhaust fan and the compressed air pipe, the hydrogen can be exhausted more efficiently.

The entire content of a Japanese Patent Application No. P2002-296315 with a filing date of October 9, 2002 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. A container structure for a fuel cell, comprising:
a fuel cell container (12);
a separate plate (9) having a plurality of orifices (6);
an exhaust pipe (7) discharging gas in the fuel cell container (12); and
a compressed air pipe (8) sending a compressed air into the fuel cell container (12),
wherein the inside of the fuel cell container (12) is divided into an exhaust manifold unit (5) and a cell housing unit (4) housing the fuel cell (1) by the separate plate (9),
the exhaust pipe (7) is attached to connect an exhaust port (13) provided on the exhaust manifold unit (5) and an exhaust outlet (14) provided on a surface of a vehicle, and an air pressure in the exhaust manifold unit (5) is set at an atmospheric pressure, and
the compressed air pipe (8) is attached onto the cell housing unit (4), and an air pressure in the cell housing unit (4) is set equal to or smaller than a fuel cell gas pressure and equal to or larger than the atmospheric pressure.

2. A container structure for a fuel cell, comprising:
a fuel cell container (22);
a separate plate (9) having a plurality of orifices (6); and
an exhaust pipe (7) discharging gas in the fuel cell container (22),
wherein the inside of the fuel cell container (22) is divided into an exhaust manifold unit (5) and a cell housing unit (4) housing the fuel cell (1) by the separate plate (9),
the exhaust pipe (7) is attached to connect an exhaust port (13) provided on the exhaust manifold unit (5) and an exhaust outlet (14) provided on a surface of a vehicle, and
an exhaust fan (10) is provided in any one of the insides of the exhaust pipe (7) and the exhaust manifold unit (5).

3. A container structure for a fuel cell, comprising:
a fuel cell container (32);
an exhaust pipe (7) discharging gas in the fuel cell container (32);
a pipe (11) making the fuel cell container (32) and the exhaust pipe (7) communicate with each other through an orifice (6); and
a compressed air pipe (8) sending a compressed air into the fuel cell container (32),
wherein the orifice (6) and the pipe (11) are provided above the fuel cell container (32),
an air pressure in the pipe (11) is set at an atmospheric pressure by connecting the pipe (11) to the exhaust pipe (7) connected to an exhaust outlet (14) provided on a surface of a vehicle, and
the compressed air pipe (8) is attached onto the fuel cell container (32), and an air pressure in the fuel cell container (32) is set equal to or smaller than a fuel cell gas pressure and equal to or larger than the atmospheric pressure.

4. A container structure for a fuel cell according to claim 1,
wherein the exhaust manifold unit (25) is provided on a corner of an upper portion of the fuel cell container (42).

5. A container structure for a fuel cell according to claims 1, 3 or 4,
wherein the compressed air pipe (8) is attached onto a side face of the cell housing unit (4, 24).

6. A container structure for a fuel cell according to any of claims 1 through 4,
wherein the exhaust outlet (14) is provided on a side face of the vehicle (15).

7. A container structure for a fuel cell according to any of claims 1 through 4,
wherein the exhaust pipe (7) is bent at least at one spot on the way to the exhaust outlet (14).

8. A container structure for a fuel cell according to claims 1, 2 or 4,
wherein the exhaust port (13) is provided above the exhaust manifold unit (5, 25).

9. A container structure for a fuel cell according to any of claims 1 through 4,
wherein diameter of the orifices (6) close to the exhaust port (13) is set small, and diameter of the orifices (6) distant from the exhaust port (13) is set large.

10. A container structure for a fuel cell according to claims 1, 2 or 4,
wherein the fuel cell container (12, 22, 42) is configured to be divided into an upper lid portion (5, 25) and a container portion (4, 24).

11. A container structure for a fuel cell according to claims 1 or 2,
wherein the fuel cell container (12, 22) is configured to be divided into an upper lid portion (5) and a container portion (4), and
the separate plate (9) is sandwiched and fixed between the upper lid portion (5) and the container portion (4).
